# EUROPEAN PATENT APPLICATION

(11) **EP 2 490 114 A1**
(43) Date of publication of application: **22.08.2012**
(21) Application number: 12155822.5
(22) Date of filing: 16.02.2012
(51) Int. Cl.: G06F 3/048, H04M 1/67

(54) **Electronic device, controlling method thereof and computer program product**

(30) Priority: 17.02.2011 US 201161444087 P; 03.02.2012 US 201213365264
(71) Applicant: HTC Corporation, Taoyuan County 330 (TW)
(72) Inventor: Brinda, David, WA, CA California 98005 (US); Bamford, Drew, WA, CA California 98005 (US); Cielak, Matthew Joseph, Suite 400 Bellevue, CA California 98005 (US)
(74) Representative: 2K Patentanwälte Blasberg Kewitz & Reichel

(57) **Abstract**

An electronic device, a controlling method thereof and a computer program product are provided. The method includes displaying part or all of a ring and at least one function image outside the ring on a touch screen of the electronic device while the electronic device is in a user-interface lock state (S210), detecting a user input applied to one of the function images on or near the touch screen (S220), and dragging the function image in accordance with the user input (S230), wherein the function image corresponds to a predetermined function. The method further includes performing the predetermined function in response to dragging the function image into the ring (S260), and maintaining the electronic device in the use-interface lock state in response to not dragging the function image into the ring (S250).

## Description

### BACKGROUND OF THE INVENTION

### FIELD OF THE INVENTION

The present invention relates to a controlling method of an electronic device. More particularly, the present invention relates to a controlling method of an electronic device in a user-interface lock state, an electronic device and a computer program product.

### DESCRIPTION OF RELATED ART

Along with the advancement of mobile technologies, mobile electronic devices are more and more compact and powerful. Taking a mobile communication device such as a personal digital assistant (PDA) mobile phone or a smart phone as an example, it not only has various functions of a conventional communication device, but also allows users to write documents, send and receive emails, browse websites, or use instant messaging software through an inbuilt Windows operating system therein. Namely, such mobile electronic device is not only used for making phone calls, but is also used to provide diversified functions of a small personal computer. With development of wireless network technology, utilization of these functions is no longer limited by space and time, which is convenient for people who constantly pursue efficiency.

On the other hand, with quick development of touch sensitive input devices such as touch screens, manufacturers of electronic devices such as notebook computers, mobile phones or mobile multimedia players, etc. generally use a touch screen to replace a conventional keyboard to provide a user interface through which a user may interact with the devices more conveniently. Taking the mobile phone as an example, when a user operates the conventional mobile phone, the user has to click the keyboard with fingers while referring to an image displayed on a screen, so as to input characters or select menus, etc. However, to operate a mobile phone integrating a touch screen, besides the fingers, the user may also use an auxiliary device such as a stylus to directly input characters on the touch screen or open application programs. Therefore, the touch screen provides the user a flexible and intuitive input interface.

Though it is convenient to operate the mobile electronic device through the touch screen, manufacturers of the mobile electronic device have to develop a mechanism for preventing unintentional or unauthorized use of the device, so as to prevent activation of a function caused by inadvertent touch of the touch screen, which may cause trouble in using the device. However, users may still have to use the mobile electronic device in certain way after it is locked. Therefore, it is necessary to develop procedures to facilitate use of the locked mobile electronic device.

### SUMMARY OF THE INVENTION

Accordingly, the present invention is directed to an electronic device, a controlling method thereof and a computer program product, by which an interactive and intuitive procedure for using the electronic device in a user-interface lock state is provided.

The present invention is directed to a method of controlling an electronic device with a touch screen. The method includes displaying part or all of a ring and a function image outside the ring on the touch screen while the electronic device is in a user-interface lock state, detecting a user input applied to the function image on or near the touch screen, and dragging the function image in accordance with the user input, wherein the function image corresponds to a predetermined function. The method further includes performing the predetermined function in response to dragging the function image into the ring, and maintaining the electronic device in the use-interface lock state in response to not dragging the function image into the ring.

The present invention provides an electronic device having a touch screen, memory, one or more processors and one or more programs. In which, the one or more programs are stored in the memory and configured to be executed by the one or more processors. The one or more programs including instructions to display part or all of a ring and a function image outside the ring on the touch screen while the electronic device is in a user-interface lock state, to detect a user input applied to the function image on or near the touch screen, to drag the function image in accordance with the user input, wherein the function image corresponds to a predetermined function, to perform the predetermined function in response to dragging the function image into the ring, and to maintain the electronic device in the use-interface lock state in response to not dragging the function image into the ring.

The present invention provides a computer program product for use in conjunction with an electronic device comprising a touch screen, the computer program product comprising a computer readable storage medium and an executable computer program mechanism embedded therein, the executable computer program mechanism comprising instructions for displaying part or all of a ring and a function image outside the ring on the touch screen while the electronic device is in a user-interface lock state, detecting a user input applied to the function image on or near the touch screen, dragging the function image in accordance with the user input, wherein the function image corresponds to a predetermined function, performing the predetermined function in response to dragging the function image into the ring, and maintaining the electronic device in the use-interface lock state in response to not dragging the function image into the ring.

In the present invention, while the electronic device is in a user-interface lock state, a user may drag a function image into a ring displayed on the touch screen so as to invoke a corresponding function and unlock the touch screen accordingly. Therefore, a convenience and intuitive way to launch an application or handle an application-triggered event while the electronic device is in a user-interface lock state is provided.

In order to make the aforementioned and other objects, features and advantages of the present invention comprehensible, preferred embodiments accompanied with figures are described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram of an electronic device according to an embodiment of the present invention.

FIG. 2 is a flow chart of a method of controlling an electronic device according to an embodiment of the present invention.

FIGs. 3A-3D, 4, 5. 6A-6C, 7A-7H, 8A-8C are schematic views illustrating the visual output while controlling an electronic device in the user-interface lock state according to several embodiments of the invention.

FIGs. 9-13 are schematic views illustrating a ring displayed on the touch screen while an electronic device is in the user-interface lock state according to another embodiments of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In order to make the content of the present invention more clear, embodiments are described as follows to serve as the examples of which the present invention may be implemented accordingly.

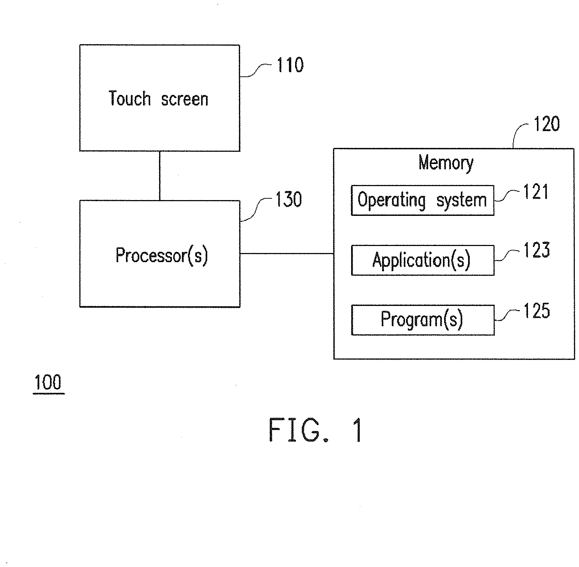

FIG. 1 is a block diagram of an electronic device according to an embodiment of the present invention. Referring to FIG. l, the electronic device 100 includes a touch screen 110, a memory 120, and one or more processors 130. The electronic device 100 is, for example, a mobile phone, a smart phone, a personal digital assistant (PDA), a laptop, a tablet personal computer (PC), or a digital camera, the present invention is not limited thereto.

The touch screen 110 may be a resistive touch screen, a capacitive touch screen, an optical touch screen, or a magnetic touch screen, which is not limited by the present invention. The touch screen 110 is used as an input and output interface for the electronic device 100. That is, the touch screen 110 is configured to display different visual output when using the electronic device 100, and to receive different touch operations from a user. In which, the visual output may be the operating result and/or the operation image such as the home screen image, the lock screen image, or the graphical user interface of applications. While the electronic device 100 is in operation, movement of one or more objects on or near the touch screen 110 can be detected, and the corresponding signals are transmitted to the processor 130 to perform the related action on the electronic device 100, then the generated visual output is displayed on the touch screen 110.

The memory 120 may be an internal storage unit such as a random access memory or a non-volatile memory (e.g., a flash memory, or a magnetic disk storage device). The memory 120 may also be an external storage unit such as Secure Digital (SD) card, a SIM card, or other storage media which can be externally connected to the electronic device 100. The memory 120 may further be a networked online storage that can be accessed through a communication network by a network component (not shown) of the electronic device 100.

In the present embodiment, at least an operating system 121, one or more applications 123, and one or more programs 125 are stored in the memory 120.

The operating system 121 includes various software components and/or drivers and is used for managing a general operation of the electronic device 100. For example, the operating system 121 provides a user interface for users to interact with the electronic device 100, manages applications 123 that are running on the electronic device 100, and manages files stored in the electronic device 100.

The one or more applications 123 include, but not limited to, a phone application, an email application, a camera application, a message application, a contact application, a social network application, a financial application, an alarm application, or a calendar application. The applications 123 may be native applications pre-installed on the electronic device 100, or may be downloaded from third-party sites or online stores.

The one or more programs 123 comprise instructions to be executed by the one or more processors 130. To be specific, the one or more processors 130 run the one or more programs 123 to perform a method of controlling the electronic device 100 of the present embodiment. The controlling method of the present embodiment is described later with reference of figures.

The one or more processors 130 may be a central processing unit (CPU), which is configured to run various software programs and/or instruction sets stored in the memory 120 to perform different functions for the electronic device 100 and to process data after the electronic device 100 is powered on.

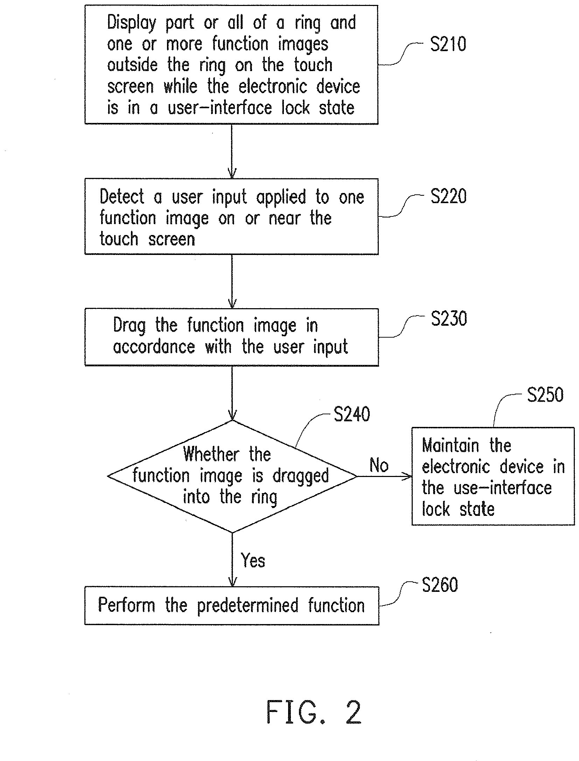

Below, the operation of the electronic device 100 will be described in detail with reference to another embodiment of the invention. FIG. 2 is a flow chart of a method of controlling an electronic device according to the embodiment of the present invention. Please refer to Fig. 1 and Fig. 2.

In the present embodiment, the electronic device 100 is set to a user-interface lock state. To be specific, the electronic device 100 may have a plurality of operation states including the user-interface lock state and a user-interface unlock state. In the user-interface lock state, the electronic device 100 is in operation but ignores most user input. That is, the electronic device 100 in the user-interface lock state may only respond to a predefined set of user inputs, including input that corresponds to an attempt to switch the electronic device 100 to the user-interface unlock state or input that applies to a function image displayed on the touch screen 110.

On the other hand, while the electronic device 100 is in the user-interface unlock state, the electronic device 100 can be operated by the user normally. That is, general functions supported by the electronic device 100 may be invoked, and all kinds of user input from the touch screen 110 or the other input device (e.g., a hardware button, a key, or a scroll wheel) can be responded by the electronic device 100.

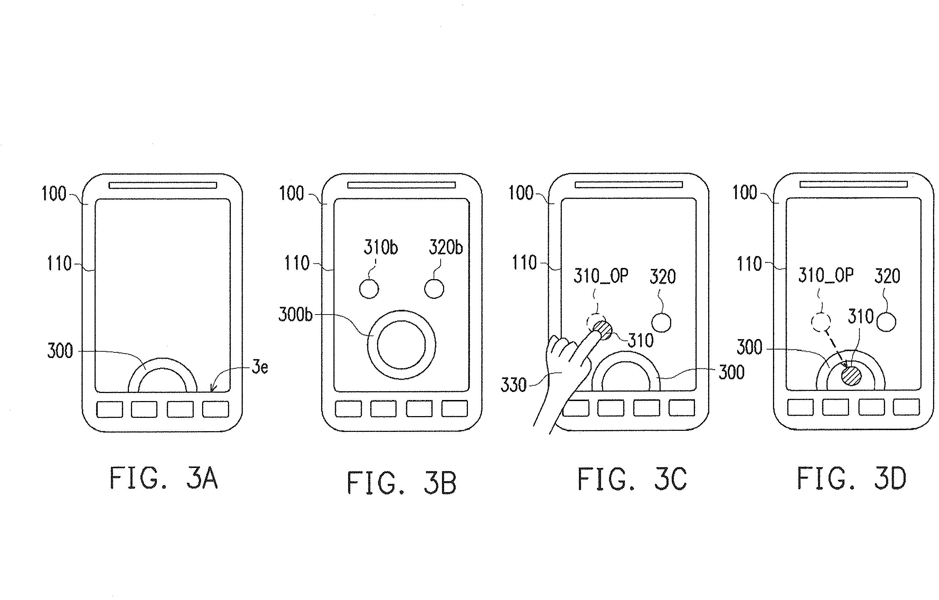

In step S210, part or all of a ring and one or more function images outside the ring are displayed on the touch screen 110 while the electronic device 100 is in the user-interface lock state. Referring to Fig. 3A, in this embodiment, the ring 300 is partially displayed on the touch screen 110, the displayed part of the ring 300 and at least one edge of the touch screen 110 (e.g., the edge 3e) form a closed area, and the one or more function images (e.g., the function images 310 and 320) are all displayed outside the closed area bounded by the ring 300. In another embodiment, as shown in Fig. 3B, the entire ring 300b is displayed on the touch screen 110, the ring 300b forms a closed area by itself, and the one or more function images (e.g., the function images 310b and 320b) are all displayed outside the ring 300b. Each function image displayed on the touch screen 110 corresponds to a predetermined function, and is preloaded in or acquired by the electronic device 100. For example, the function image may be an application icon, a software button, or an image downloaded or captured by the user through the electronic device 100. On the other word, the function image to be displayed on the touch screen 110 may be predetermined by the electronic device 100 or selected by the user.

In step S220, a user input applied to one function image on or near the touch screen 110 is detected. The user input is, for example, an object contact on or near the touch screen 110 associated with the position of the function image.

Then in step S230, the function image is dragged in accordance with the user input. Therefore, while the user input is not terminated, the display position of the function image is changed in accordance with the movement of the user input, and the visual feedback is provided to the user through the touch screen 110. For example, as shown in Fig. 3C, while the user touches the function image 310 with his/her finger 330 and drags the function image 310, the display position of the function image 310 is different from the original position 310_OP thereof and is varied accordingly.

Once the user input is terminated, in step S240, it is determined that whether the function image is dragged into the ring. That is, to determine whether the function image is dragged into the closed area bounded by the ring.

If the function image is not dragged into the ring, in step S250, the electronic device 100 is maintained in the use-interface lock state. That is, only the user input corresponding to the attempt of switching the electronic device 100 to the user-interface unlock state or the input that applies to the displayed function image will be responded.

However, if the function image is dragged into the ring, in step S260, the predetermined function corresponding to the function image is performed. For example, as shown in Fig, 3D, while the function image 310 is dragged from its original position 310_OP into the ring 300, the predetermined function corresponding to the function image 310 is performed. The exemplars of performing the predetermined function corresponding to the function image are described in the followings.

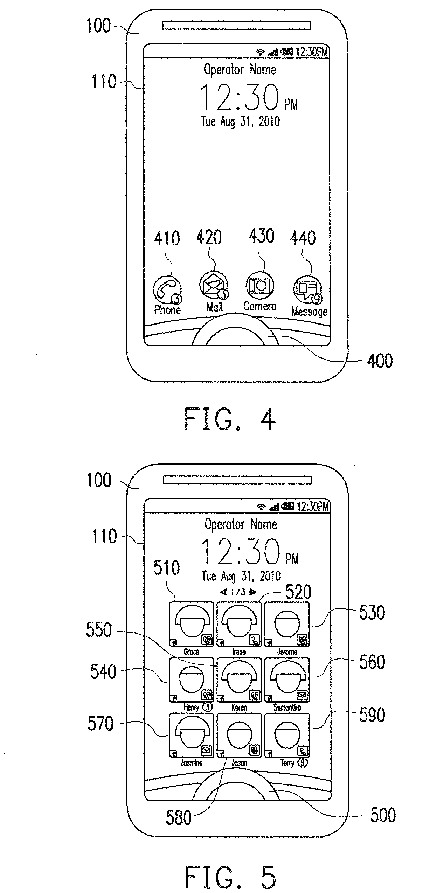

In one embodiment, as shown in Fig. 4, one or more function images (e.g., the function images 410-440) will be displayed on the touch screen 110 as long as the electronic device 100 is in the user-interface lock state, and the predetermined function corresponding to this kind of function image is to open a corresponding application. The application is, for example, a phone application, an email application, a camera application, or a message application, the present invention is not limited thereto. Accordingly, if the user drags this kind of function image into the ring 400 while the electronic device 100 is in the user-interface lock state, the corresponding application will be launched automatically. In Fig. 4, the function images 410-440 are corresponding to the phone application, the email application, the camera application, and the message application respectively. Therefore, if one of the function images 410-440 is dragged into the ring 400, the corresponding application is then launched.

In another embodiment, the predetermined function corresponding to the function image displayed on the touch screen 110 as long as the electronic device 100 is in the user-interface lock state is to access a social networking service or a website. For example, referring to Fig. 5, nine function images 510-590 are displayed outside the ring 500 while the electronic device 100 is in the user-interface lock state. The function images 510-590 are acquired by the electronic device 100 from a certain social networking website through the network, and each of the function images 510-590 is corresponding to a user of the social networking website who is a friend of the user of the electronic device 100. If the user drags one of the function images 510-590 into the ring 500 while the electronic device 100 is in the user-interface lock state, a main page of the website user corresponding to the dragged function image is then displayed on the touch screen 110.

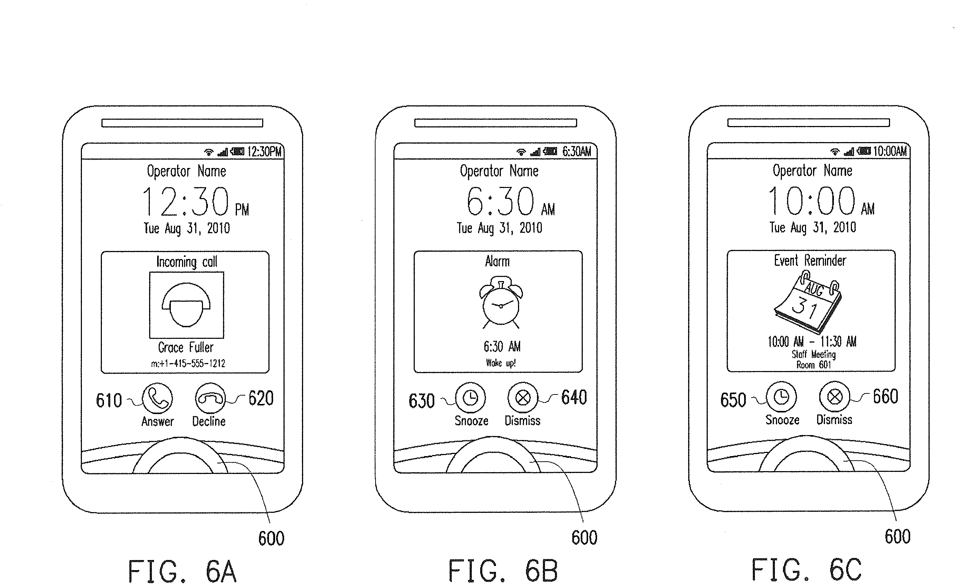

In another embodiment, the function image that will be displayed on the touch screen 110 while the electronic device 100 is in the user-interface lock state is invoked by an occurrence of an event such as an incoming call, an alarm or a calendar reminder, etc. That is to say, in response to an occurrence of an incoming call, an alarm or a calendar reminder during the electronic device 100 is in the user-interface lock state, the one or more function images corresponding to the event are then displayed on the touch screen 110. At this time, if the user drags this kind of function image into the ring, an operation of the event will be executed. For example, as shown in Fig. 6A, if one or more function images 610 and 620 are invoked by an occurrence of an incoming call, the user may answer or decline the incoming call by dragging the related function image 610 or 620 into the ring 600. Referring to Fig. 6B, if one or more function images 630 and 640 are invoked by an activation of an alarm, the user may snooze or dismiss the alarm by dragging the related function image 630 or 640 into the ring 600. Referring to Fig. 6C, if one or more function images 650 and 660 are invoked by an activation of a calendar reminder, the user may snooze or dismiss the calendar reminder by dragging the related function image 650 or 660 into the ring 600.

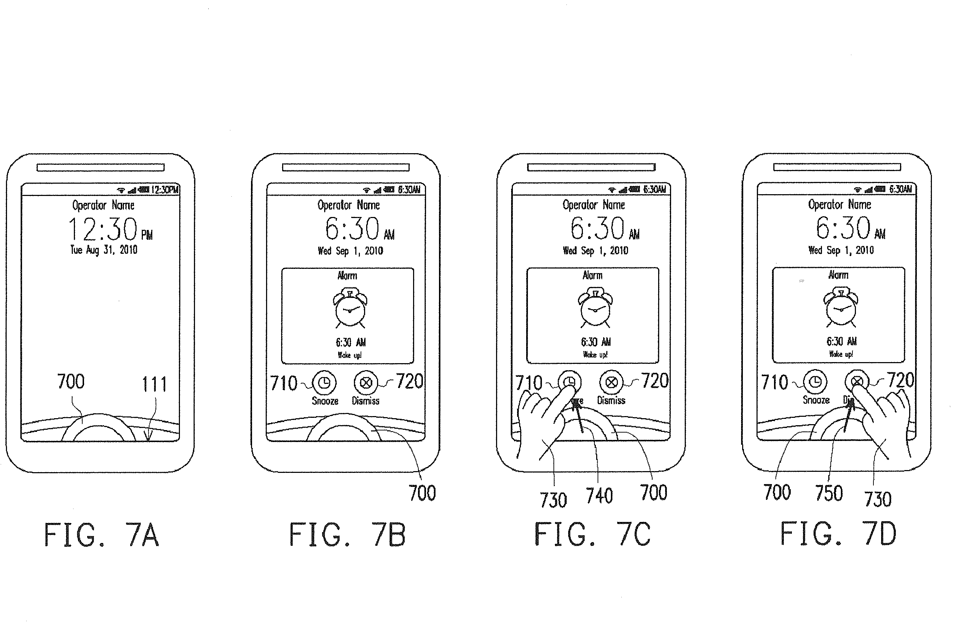

Figs. 7A-7H illustrate schematic diagrams while controlling an electronic device in the user-interface lock state according to an embodiment of the invention.

In Fig 7A, when the electronic device 100 is in the user-interface lock state, the ring 700 is partially displayed on the touch screen 110, wherein the displayed part of the ring 700 and the edge 111 of the touch screen 110 form a closed area.

It is assumed that an alarm event happens while the electronic device 100 is still in the user-interface lock state. Accordingly, as shown in Fig. 7B, two function images 710 and 720 are displayed outside the ring 700 in response to the occurrence of the alarm event. In which, the function image 710 is corresponding to a snoozing operation and the function image 720 is corresponding to a dismissing operation.

As shown in Fig. 7C, if the user touches the function image 710 without moving his/her finger 730 (or the input tool) and the touch time reaches a predetermined time threshold, the ring 700 is slightly moved toward the function image 710 (e.g., along the direction 740) in response to detecting the touch. Alternatively, as shown in Fig. 7D, if the user touches the function image 720 without moving his/her finger 730 (or the input tool) and the touch time reaches the predetermined time threshold, the ring 700 is slightly moved toward the function image 720 (e.g., along the direction 750) in response to detecting the touch. That is, the ring 700 is slightly moved in response to detecting the static touch on the function image 710 or 720.

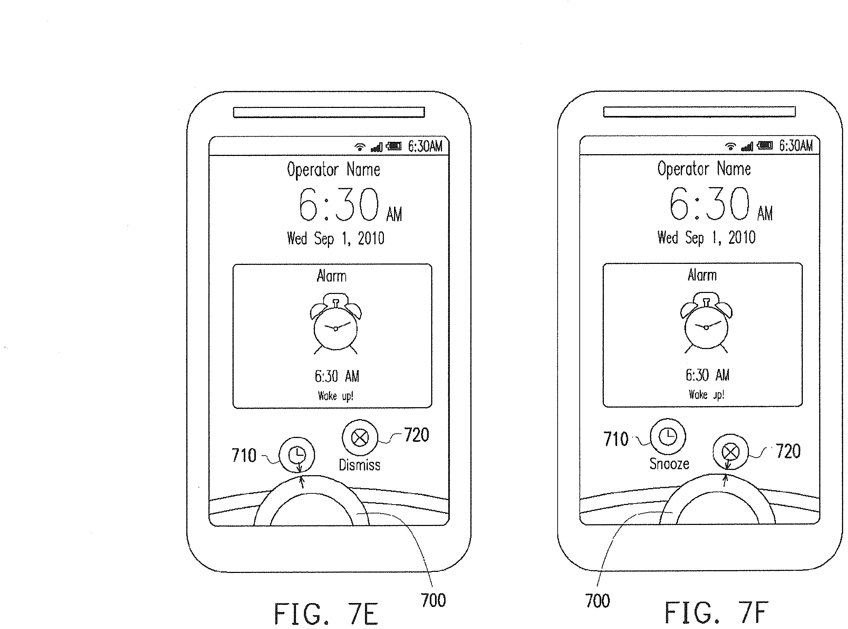

In another embodiment, as shown in Fig. 7E, if the user taps the function image 710 and then lifts his/her finger (or the input tool), the function image 710 and the ring 700 are moved toward each other. As shown in Fig. 7F, if the user taps the function image 720 and then lifts his/her finger (or the input tool), the function image 720 and the ring 700 are moved toward each other.

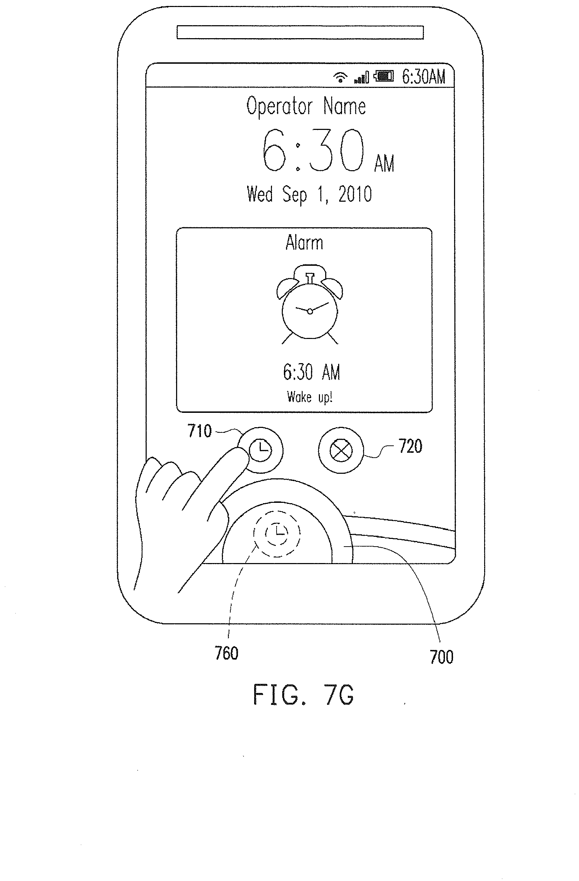

Furthermore, while detecting the user input applied to the function image 710 or 720 near or on the touch screen 110, a hint image of the function image being touched or tapped is displayed inside the ring 700. Referring to Fig. 7G, it is assumed that the user touch the function image 710 with his/her finger 730, a hint image 760 corresponding to the function image 710 is then displayed inside the ring 700. The hint image 760 may have the same shape and pattern with the function image 710 but provides the grayscale effect. However, the appearance of the hint image is not limited in the present invention. In the present embodiment, to move the touched function image 710 or 720 and/or the ring 700, and to show the corresponding hint image can provide hints or reminders of the operation to drag the function image 710 or 720 into the ring 700 to the user.

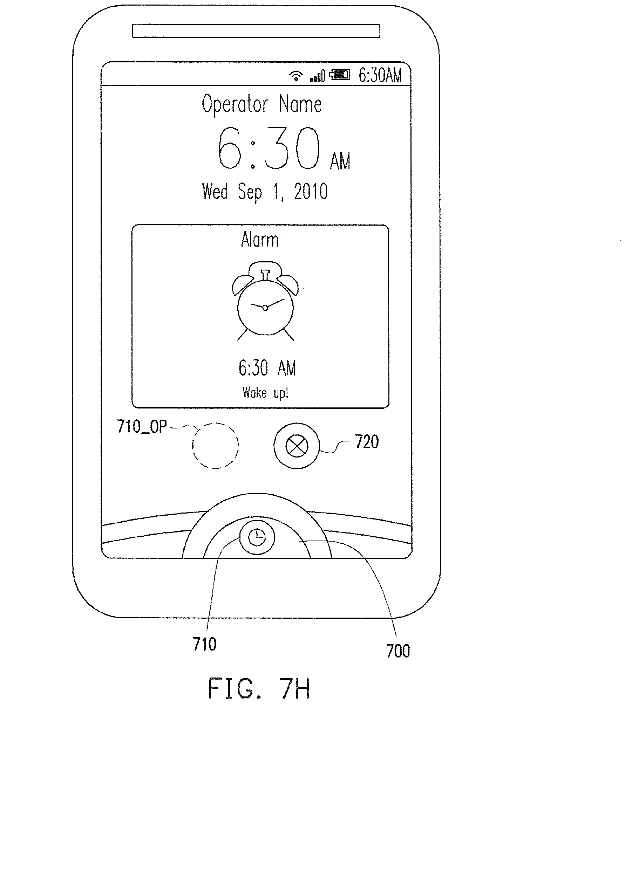

As shown in Fig. 7H, if the user drags the function image 710 from the original position 710_OP into the ring 700 and releases the function image 710, the snoozing operation is executed to snooze the alarm accordingly.

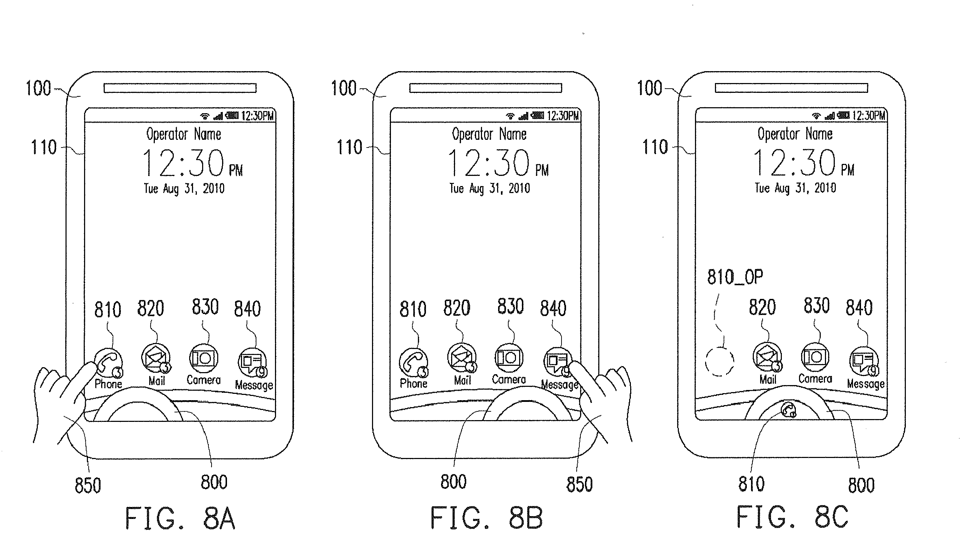

Figs. 8A-8C illustrate schematic diagrams while controlling an electronic device in the user-interface lock state according to another embodiment of the invention.

In Fig 8A, when the electronic device 100 is in the user-interface lock state, a part of the ring 800 and four function images 810-840 are displayed on the touch screen 110. In which, the function images 810-840 are respectively corresponding to four applications. In the present embodiment, the applications are default applications predetermined by the electronic device 100. However, the number of function images being displayed is not limited in the present invention, in another word, the user may select one or more applications from all applications installed in the electronic device 100, and one or more function images corresponding to each application selected by the user will be displayed along with the ring 800 while the electronic device 100 is in the use-interface lock state.

Meanwhile, if any one of the function images 810-840 is touched, the ring 800 will move toward the touched function image. For example, as shown in Fig. 8A, it is assumed that the function image 810 is touched by the user, the ring 800 moves toward the function image 810. As shown in Fig. 8B, if the function image 840 is touched by the user, the ring 800 moves toward the function image 840.

Alternatively, in other embodiment, is the user taps one of the function images 810-840 and then lifts his/her finger, the tapped function image and the ring 800 will move toward each other. Furthermore, a hint image of the touched or tapped function image is displayed inside the ring 800 in response to detecting the user input applied on the function image.

If the user touches the function image 810, drags the function image 810 from its original position 810_OP into the ring 800, and then releases the function image 810, as shown in Fig. 8C, the electronic device 100 exits the use-interface lock state and the application (e.g. the phone application) corresponding to the function image 810 is launched. To be specific, the default view (e.g., the default user interface) of the application will be displayed on the touch screen 110. On the other hand, if the function image 810 corresponds to the application which is already launched, the latest view of the application is displayed to present the latest operating result to the user.

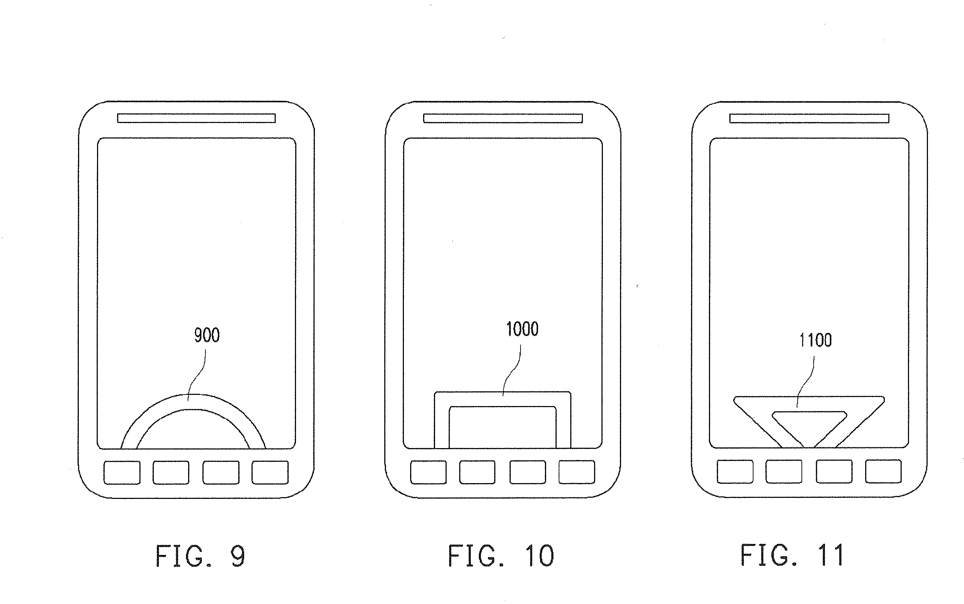

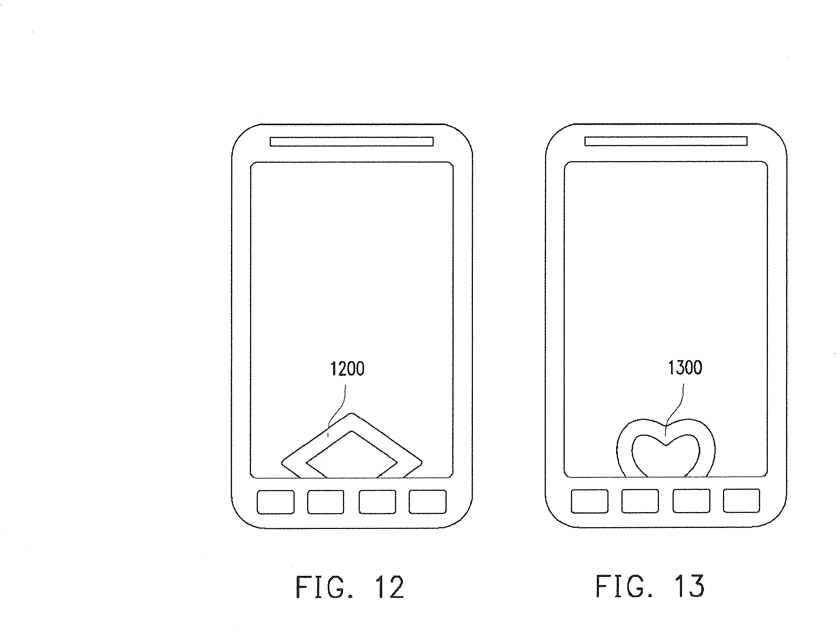

In the forgoing embodiments, the ring displayed on the touch screen 110 while the electronic device 100 is in a user-interface lock state is a circular ring. However, it should be appreciated that while the electronic device 100 is in the user-interface lock state, the ring displayed on the touch screen 110 may have an elliptic shape, a polygon shape, or an irregular shape. That is, the shape of the ring is not limited by the present invention. For example, the ring may have an elliptic shape as the ring 900 shown in Fig. 9. In other embodiment, the ring may have a rectangle shape as the ring 1000 shown in Fig. 10, a triangle shape as the ring 1100 shown in Fig. 11, or a rhombus shape as the ring 1200 shown in Fig. 12. Furthermore, the ring may have a heart shape as the ring 1300 shown in Fig. 13.

An embodiment of the invention provides a computer program product, in which the computer program product comprises a computer readable storage medium and an executable computer program mechanism embedded therein. After the computer program mechanism is executed by an electronic device having a touch screen, the electronic device can achieve the effects illustrated in the afore-described embodiments. The computer readable storage medium may be a read only memory, a random access memory, a magnetic tape, a floppy disk, a hard disk, an optical disk, or a transmission medium, etc. Alternatively, the computer program product may be directly provided through a network transmission, which is not to be limited by invention herein.

In view of the above, the present invention provides an electronic device, a controlling method thereof and a computer program product. In which at least a part of a ring and at least one function image are displayed on the touch screen while the electronic device is in a user-interface lock stat. The user may touch and then drag the function image into the ring to unlock the electronic device and make the electronic device performs the predetermined function. Consequently, a convenient mechanism is provided for the user to launch an application or to handle an application-triggered event while the electronic device is in a user-interface lock state.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method of controlling an electronic device with a touch screen, comprising :
displaying part or all of a ring and a function image outside the ring on the touch screen while the electronic device is in a user-interface lock state;
detecting a user input applied to the function image on or near the touch screen;
dragging the function image in accordance with the user input, wherein the function image corresponds to a predetermined function;
performing the predetermined function in response to dragging the function image into the ring; and
maintaining the electronic device in the use-interface lock state in response to not dragging the function image into the ring.

2. The method as claimed in claim 1, wherein the predetermined function comprises opening an application.

3. The method as claimed in claim 1 or 2, wherein displaying the function image is invoked by an occurrence of an event.

4. The method as claimed in claim 3, wherein the predetermined function comprises executing an operation of the event.

5. The method as claimed in one of the preceding claims, wherein the function image is preloaded in or acquired by the electronic device.

6. The method as claimed in one of the preceding claims, further comprising:
moving the ring toward the function image in response to detecting the user input applied to the function image near or on the touch screen.

7. The method as claimed in one of the preceding claims, further comprising:
moving the function image toward the ring in response to detecting the user input applied to the function image near or on the touch screen.

8. The method as claimed one of the preceding claims, further comprising:
displaying a hint image of the function image inside the ring on the touch screen in response to detecting the user input applied to the function image near or on the touch screen.

9. An electronic device, comprising:
a touch screen;
memory;
one or more processors; and
one or more programs, wherein the one or more programs are stored in the memory and configured to be executed by the one or more processors, the one or
more programs including instructions:
to display part or all of a ring and a function image outside the ring on the touch screen while the electronic device is in a user-interface lock state;
to detect a user input applied to the function image on or near the touch screen;
to drag the function image in accordance with the user input, wherein the function image corresponds to a predetermined function;
to perform the predetermined function in response to dragging the function image into the ring; and
to maintain the electronic device in the use-interface lock state in response to not dragging the function image into the ring.

10. The electronic device as claimed in claim 9, wherein the predetermined function comprises opening an application.

11. The electronic device as claimed in claim 9 or 10, wherein displaying the function image is invoked by an occurrence of an event.

12. The electronic device as claimed in claim 11, wherein the predetermined function comprises executing an operation of the event.

13. The electronic device as claimed in one of the claims 9-12, wherein the function image is preloaded in or acquired by the electronic device.

14. The electronic device as claimed in one of the claims 9-13, wherein the one or more programs further including instructions to move the ring toward the function image in response to detecting the user input applied to the function image near or on the touch screen.

15. The electronic device as claimed in one of the claims 9-14, wherein the one or more programs further including instructions to move the function image toward the ring in response to detecting the user input applied to the function image near or on the touch screen.

16. The electronic device as claimed in claim 12, wherein the one or more programs further including instructions to display a hint image of the function image inside the ring on the touch screen in response to detecting the user input applied to the function image near or on the touch screen.
